# EUROPEAN PATENT APPLICATION

(11) **EP 4 738 178 A1**
(43) Date of publication of application: **06.05.2026**
(21) Application number: 25210375.9
(22) Date of filing: 22.10.2025
(51) Int. Cl.: G06F 30/20, H01M 10/0525

(54) **METHOD AND SYSTEM FOR OPTIMIZING PARAMETERS OF ELECTROCHEMICAL BATTERY MODEL**

(30) Priority: 05.11.2024 KR 20240155727
(71) Applicant: Samsung SDI Co., Ltd., Yongin-si, Gyeonggi-do 17084 (KR); Chungbuk National University Industry-Academy Cooperation Foundation, Cheongju-si, Chungcheongbuk-do 28644 (KR)
(72) Inventor: CHO, Sungmin, 17084 Yongin-si (KR); KWON, Tae-Ho, 17084 Yongin-si (KR); BAEK, Donkyu, 30146 Sejung-si (KR); KIM, Minsu, 28666 Cheongju-si (KR); LEE, Yun Ji, 28664 Cheongju-si (KR)
(74) Representative: Marks & Clerk LLP

(57) **Abstract**

The present disclosure relates to a method and system for optimizing parameters of an electrochemical model. The method of optimizing parameters of an electrochemical battery model according to the present disclosure is performed by the system for optimizing parameters of an electrochemical battery model. The method includes determining values of fixed parameters of the electrochemical model on the basis of cell design information of an evaluation target battery, determining an optimal combination of a capacitive parameter and a starting voltage parameter of the electrochemical model by applying a first charging pattern to the electrochemical model while fixing a resistance parameter of the electrochemical model to a preset value, and determining an optimal combination of resistance parameters of the electrochemical model by applying a second charging pattern applied to the electrochemical model while the capacitive parameter and the starting voltage parameter are set to the optimal combination.

## Description

### FIELD

The present disclosure relates to a method and system for optimizing parameters of an electrochemical model among battery models.

### BACKGROUND

Unlike primary batteries that cannot be charged, batteries or secondary batteries are batteries that can be charged and discharged. Low-capacity batteries may be used in portable small electronic devices such as smartphones, feature phones, laptop computers, digital cameras, and camcorders, whereas large-capacity batteries are widely used as power sources for driving motors in hybrid vehicles, electric vehicles, and the like as well as for power storage batteries. Such a battery includes an electrode assembly formed of a positive electrode and a negative electrode, a case for accommodating the electrode assembly, and electrode terminals connected to the electrode assembly.

The herein information disclosed in this Background section is for enhancement of understanding of the background of the present disclosure, and therefore, it may contain information that does not constitute related art.

### [Related Art Document]

### [Patent Document]

(Patent Document 1) Korean Laid-Open Patent Application No. 10-2020-0126897A (publication date: November 9, 2020)
(Patent Document 2) Korean Laid-Open Patent Application No. 10-2013-0134982A (publication date: December 10, 2013)

### [Non-Patent Document]

(Non-Patent Document 1) Thomas F. Fuller and Marc Doyle and John Newman, "Simulation and Optimization of the Dual Lithium Ion Insertion Cell," Journal of The Electrochemical Society, vol.141, no.1, pp.1-10, 1994. https://dx.doi.org/10.1149/1.2054684

### SUMMARY

The present disclosure is directed to providing a method and system for classifying parameters of an electrochemical battery model according to responsiveness to a charging rate, gradually determining the parameters of the electrochemical battery model according to a charging pattern (charging sequence), and determining one optimal combination according to a predetermined criterion when a plurality of optimal combinations of the parameters are derived.

However, the technical problems to be solved by the present disclosure and problem-solving means are not limited to the herein-described contents, and other problems and problem-solving means not described can be clearly understood by those skilled in the technical field to which the present disclosure pertains from the following description of the present disclosure.

According to aspects of the present disclosure, there is provided a method of optimizing parameters of an electrochemical battery model, which includes determining, by a system for optimizing parameters of the electrochemical battery model, values of fixed parameters of the electrochemical model on the basis of cell design information of an evaluation target battery; determining, by the system, an optimal combination of a capacitive parameter and a starting voltage parameter of the electrochemical model through a first simulation in which a first charging pattern is applied to the electrochemical model while fixing a resistance parameter of the electrochemical model to a preset value; and determining, by the system, an optimal combination of the resistance parameter by changing the resistance parameter through a second simulation in which a second charging pattern is applied to the electrochemical model while the capacitive parameter and the starting voltage parameter are set to the optimal combination.

A charging speed of the first charging pattern may be lower than a charging speed of the second charging pattern. The first charging pattern may be a low-speed charging pattern, and the second charging pattern may be a high-speed charging pattern.

The capacitive parameter may include a maximum allowable concentration of positive lithium ions and a maximum allowable concentration of negative lithium ions.

The starting voltage parameter may include a positive electrode starting voltage and a negative electrode starting voltage.

The resistance parameter may include a positive electrode reaction rate, a negative electrode reaction rate, and ion conductivity in an electrolyte.

In embodiments of the present disclosure, the determining of the optimal combination of the capacitive parameter and the starting voltage parameter may include determining, by the system, the optimal combination of the capacitive parameter and the starting voltage parameter within a set allowable range of the capacitive parameter and the starting voltage parameter.

In embodiments of the present disclosure, the method of optimizing parameters of an electrochemical battery model may further include checking, by the system, whether a plurality of optimal combinations are determined for the capacitive parameter, the starting voltage parameter, and the resistance parameter; and when the plurality of optimal combinations are determined for the capacitive parameter, the starting voltage parameter, and the resistance parameter, determining, by the system, a final parameter combination among the plurality of optimal combinations on the basis of a final resistance value included ina result of the second simulation and confirming the electrochemical model by substituting the final parameter combination into the electrochemical model.

In embodiments of the present disclosure, the method of optimizing parameters of an electrochemical battery model may further include predicting, by the system, charging time and occurrence of a side reaction of the evaluation target battery through a third simulation in which a third charging pattern is applied to the confirmed electrochemical model.

According to aspects of the present disclosure, there is provided a method for optimizing parameters of an electrochemical battery model, which includes a memory configured to store computer-readable commands and at least one processor configured to execute the commands.

The at least one processor may execute the commands to determine values of fixed parameters of the electrochemical model on the basis of cell design information of an evaluation target battery, determine an optimal combination of a capacitive parameter and a starting voltage parameter of the electrochemical model through a first simulation in which a first charging pattern is applied to the electrochemical model while fixing a resistance parameter of the electrochemical model to a preset value, and determine an optimal combination of the resistance parameter by changing the resistance parameter through a second simulation in which a second charging pattern is applied to the electrochemical model while the capacitive parameter and the starting voltage parameter are set to the optimal combination.

A charging speed of the first charging pattern may be lower than a charging speed of the second charging pattern. The first charging pattern may be a low-speed charging pattern, and the second charging pattern may be a high-speed charging pattern.

The capacitive parameter may include a maximum allowable concentration of positive lithium ions and a maximum allowable concentration of negative lithium ions.

The starting voltage parameter may include a positive electrode starting voltage and a negative electrode starting voltage.

The resistance parameter may include a positive electrode reaction rate, a negative electrode reaction rate, and ion conductivity in an electrolyte.

In embodiments of the present disclosure, during the process of determining the optimal combination of the capacitive parameter and the starting voltage parameter, the at least one processor may determine the optimal combination of the capacitive parameter and the starting voltage parameter within a set range of the capacitive parameter and the starting voltage parameter.

In embodiments of the present disclosure, the at least one processor may check whether a plurality of optimal combinations is determined for the capacitive parameter, the starting voltage parameter, and the resistance parameter; and when the plurality of optimal combinations are determined for the capacitive parameters, the starting voltage parameters, and the resistance parameters, determine the final parameter combination among the plurality of optimal combinations on the basis of the final resistance value included in a result of the second simulation and input the final parameter combination into the electrochemical model to confirm the electrochemical model.

In embodiments of the present disclosure, the at least one processor may predict a charging time of the evaluation target battery and whether a side reaction occurs through a third simulation in which a third charging pattern is applied to the confirmed electrochemical model.

Aspects and features of the present disclosure are not limited to those described herein, and other aspects and features not specifically mentioned herein will be clearly understood by those skilled in the art from the description of the present disclosure herein.

At least some of the above and other features of the invention are set out in the claims.

### BRIEF DESCRIPTION OF THE DRAWINGS

The herein and other objects, features and advantages of the present disclosure will become more apparent to those of ordinary skill in the art by describing example embodiments thereof in detail with reference to the accompanying drawings, in which:
FIG. 1 is a block diagram illustrating a configuration of a system for optimizing parameters of an electrochemical model according to embodiments of the present disclosure;
FIG. 2 is a flowchart illustrating a method of optimizing parameters of an electrochemical model according to embodiments of the present disclosure;
FIG. 3 is a diagram illustrating allowable ranges of the parameters of the electrochemical model;
FIG. 4 is a diagram for describing factors constituting a cost function;
FIG. 5 is a diagram for describing a calculation method of the cost function; and
FIG. 6 is a diagram for describing a process of fitting simulation data to actually measured data according to optimization of the parameters of the electrochemical model.

### DETAILED DESCRIPTION

Hereinafter, embodiments of the present disclosure will be described, in detail, with reference to the accompanying drawings. Before describing the present disclosure, terms or words used herein and the appended claims should not be construed to be limited to ordinary or dictionary meanings, and should be interpreted in accordance with the meaning and concept consistent with the technical scope of the present disclosure according to the principle that inventors can properly define concepts of terms in order to describe their disclosure in the best way. Therefore, the embodiments described herein and the configurations shown in the drawings are merely some embodiments of the present disclosure and do not represent all the technical scope of the present disclosure such that it should be understood that there may be various equivalents and modifications capable of substituting the embodiments and the configurations at the time of filing the present application.

In addition, when used herein, "comprise" and "include" and/or "comprising" and "including" mean specifying the presence of stated shapes, numbers, steps, operations, members, elements, and/or groups thereof and does not exclude the presence or addition of one or more other shapes, numbers, operations, members, elements, and/or groups.

In the figures, dimensions of the various elements, layers, etc. may be exaggerated for clarity of illustration. In addition, the same reference numerals may designate the same elements.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average. Although the terms "first, second, and the like" are used to describe various components, these components are not limited by these terms. These terms are only used for distinguishing one component from another component, and unless otherwise stated, it is of course that a first component may also be a second component. Throughout the specification, unless otherwise specifically stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "on," "connected to," or "coupled to" another component, the components may be directly "coupled" or "connected" to each other, or another component may be "interposed" between the components or each component may be "connected," "coupled," or "linked" through another component.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. Throughout the specification, when referring to "A and/or B," this means A, B or A and B unless otherwise stated, and when referring to "C to D," this means C or more and D or less unless otherwise stated.

When phrases such as "at least one of A, B and C, "at least one selected from a group of A, B and C," "at least one of A, B or C," or "at least one selected from among A, B and C" are used to designate a list of elements A, B and C, the phrase may refer to any and all suitable combinations.

The term "use" may be considered synonymous with the term "utilize." As used herein, the terms "substantially," "about," and similar terms are used as terms of approximation and not as terms of degree, and are intended to account for the inherent variations in measured or calculated values that would be recognized by those of ordinary skill in the art.

Although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements would then be oriented "above" or "over" the other elements. Thus, the term "below" may encompass both an orientation of above and below.

The terminology used herein is for the purpose of describing embodiments of the present disclosure and is not intended to be limiting of the present disclosure.

Hereinafter, embodiments of the present disclosure will be described in detail with reference to the accompanying drawings. In order to facilitate overall understanding in describing the present disclosure, the same reference numbers will be used for the same parts throughout the drawings.

An electrochemical model may be utilized to evaluate the performance of a lithium-ion battery cell or to derive an optimal charging pattern to apply to the battery cell. The electrochemical model is a model that simulates processes of lithium entering and exiting active electrode materials, diffusion in a solid matrix, and transport in an electrolyte. Among widely used electrochemical models, there is a Newman model (Non-Patent Document 1).

However, when an electrochemical model capable of being applied to a specific electrode material or specific temperature conditions is developed, it is necessary to optimize parameters of the electrochemical model on the basis of experimental data or theoretical values. In order to optimize the parameters of the electrochemical model, a cost function should be defined and parameter values should be determined to minimize the cost function. However, since there may be a plurality of parameter combinations that meet a condition of the defined cost function, it may be difficult to select the combinations, and there is a problem in that a development period is long due to the lack of reproducibility or consistency of the developed electrochemical model.

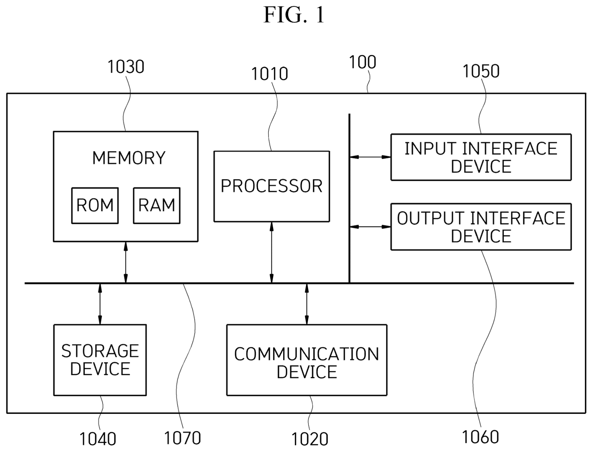

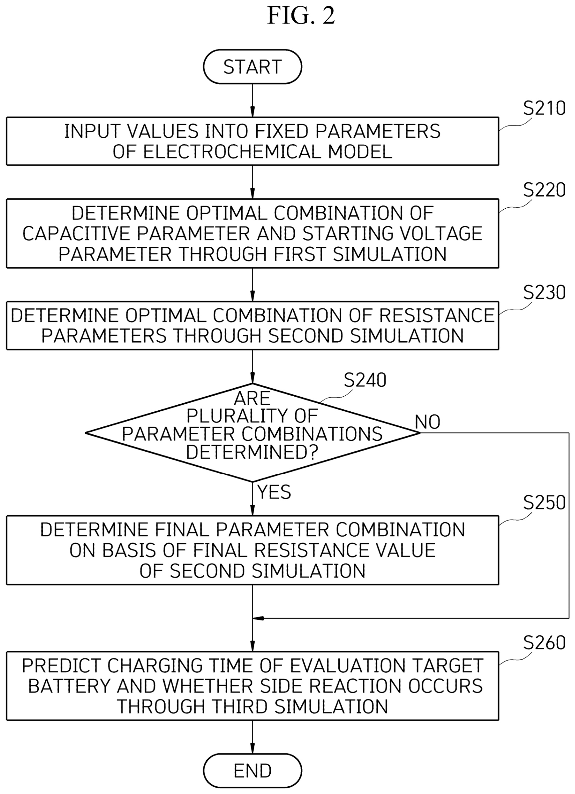

FIG. 1 is a block diagram illustrating a configuration of a system for optimizing parameters of an electrochemical model according to embodiments of the present disclosure. A system for optimizing parameters of an electrochemical battery model 100 (hereinafter abbreviated as "optimization system") may be implemented in the form of a computer system as shown in FIG. 1. The optimization system 100 performs a method of optimizing parameters of an electrochemical battery model according to embodiments of the present disclosure (see FIG. 2).

Referring to FIG. 1, the optimization system 100 may include at least one processor 1010, a memory 1030, an input interface device 1050, an output interface device 1060, and a storage device 1040, which communicate through a bus 1070. The optimization system 100 may further include a communication device 1020 coupled to a network. The processor 1010 may be a central processing unit (CPU) or a semiconductor device for executing computer-readable commands stored in the memory 1030 or the storage device 1040. The memory 1030 and storage device 1040 may include various types of volatile or non-volatile storage media. For example, the memory 1030 may include a read only memory (ROM) and a random access memory (RAM). In one example of the present disclosure, the memory 1030 may be located inside or outside the processor 1010, and the memory 1030 may be connected to the processor 1010 through various known parts. The memory 1030 may be various types of volatile or nonvolatile storage media and, for example, the memory 1030 may include a ROM or a RAM. Therefore, embodiments of the present disclosure may be implemented as a method implemented on a computer or as a non-transitory computer-readable medium in which computer-executable commands are stored. In embodiments, when computer-readable commands are executed by the processor 1010, the computer-readable commands may perform a method according to at least one aspect of the present disclosure.

The communication device 1020 may transmit or receive a wired signal or a wireless signal.

In addition, the method of optimizing parameters of an electrochemical battery model according to the embodiments of the present disclosure may be implemented in the form of a program command, which is executable through various computers, and may be recorded in a computer-readable medium.

The computer-readable medium may include program commands, data files, data structures, and the like alone or in combination. The program commands recorded in the computer-readable medium may be specially designed and configured for the embodiments of the present disclosure or may be available to those skilled in computer software. Computer-readable recording media may include hardware devices configured to store and execute program commands. For example, the computer-readable recording media may include magnetic media such as a hard disk, a floppy disk, and a magnetic tape, optical recording media such as a compact disc read only memory (CD-ROM) and a digital versatile disc (DVD), a magneto-optical medium such as a floptical disk, a ROM, a RAM, a flash memory, and the like. The program commands may include machine language codes generated by a compiler, as well as high-level language codes which are executable by a computer using an interpreter or the like.

The optimization system 100 shown in FIG. 1 is according to embodiments, and components of the optimization system 100 according to the present disclosure are not limited to the embodiment shown in FIG. 1, and some components may be added, changed, or omitted, as necessary.

The processor 1010 may determine values of fixed parameters of an electrochemical model on the basis of cell design information of an evaluation target battery by executing computer-readable commands stored in the memory 1030 or the storage device 1040, determine an optimal combination of a capacitive parameter and a starting voltage parameter of the electrochemical model through a first simulation in which a first charging pattern is applied to the electrochemical model while fixing a resistance parameter of the electrochemical model to a preset value, and determine an optimal resistance parameter or an optimal combination of resistance parameters by changing the resistance parameter (or resistance parameters) through a second simulation in which a second charging pattern is applied to the electrochemical model while the capacitive parameter and the starting voltage parameter are set to an optimal combination.

The first charging pattern may be characterized by a charging speed that is lower than that of the second charging pattern. The first charging pattern may be a low-speed charging pattern, and the second charging pattern may be a high-speed charging pattern. The capacitive parameter may include a maximum allowable concentration of positive lithium ions and a maximum allowable concentration of negative lithium ions.

The starting voltage parameter may include a positive electrode starting voltage and a negative electrode starting voltage.

The resistance parameter may include a positive electrode reaction rate, a negative electrode reaction rate, and ion conductivity in an electrolyte.

During the process of determining the optimal combination of the capacitive parameter and the starting voltage parameter, the processor 1010 may determine the optimal combination of the capacitive parameter and the starting voltage parameter within a set range of the capacitive parameter and the starting voltage parameter.

In addition, the processor 1010 may check whether a plurality of optimal combinations are determined for the capacitive parameter, the starting voltage parameter, and the resistance parameter, determine a final parameter combination among the plurality of optimal combinations on the basis of a final resistance value included in the result of the second simulation when the plurality of optimal combinations are determined for the capacitive parameter, the starting voltage parameter, and the resistance parameter, and confirm the electrochemical model by substituting the final parameter combination into the electrochemical model.

In addition, the processor 1010 may predict a charging time and occurrence of a side reaction of the evaluation target battery through a third simulation in which a third charging pattern is applied to the confirmed electrochemical model.

Detailed functions of the optimization system 100 shown in FIG. 1 will be described with reference to FIG. 2.

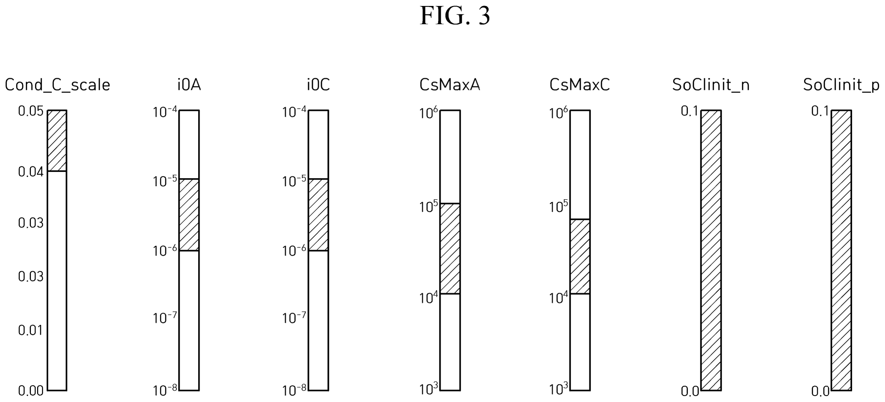

FIG. 2 is a flowchart illustrating a method of optimizing parameters of an electrochemical model according to embodiments of the present disclosure. FIGS. 3 to 6 will be referred to in the description of FIG. 2.

For convenience of description, it is assumed that the method of optimizing parameters of an electrochemical battery model shown in FIG. 2 is performed by the optimization system 100.

Referring to FIG. 2, the method of optimizing parameters of an electrochemical battery model according to embodiments of the present disclosure may include operations S210 to S260. The method of optimizing parameters of an electrochemical battery model shown in FIG. 2 is according to one embodiment, and operations of the method of optimizing parameters of an electrochemical battery model according to the present disclosure are not limited to the embodiment shown in FIG. 2, and some operations may be added, changed, or omitted, as necessary.

The electrochemical model is a model that simulates processes of lithium entering and exiting active electrode materials, diffusion in a solid matrix, and transport in an electrolyte. The electrochemical model, which is an optimization target in the present disclosure, may be a mathematical model, such as a Newman model (Non-Patent Document 1). However, the electrochemical model to which the present disclosure is applied is not limited.

The electrochemical model has fixed parameters and variable parameters.

The fixed parameters may be parameters that do not change during the optimization process. For example, the fixed parameters may be a composition, an area, a thickness, and a pore size (which may also be referred to as a "capacity") of the electrode plate. The fixed parameters may be derived on the basis of cell design information or form factor information. However, in the present disclosure, the fixed parameters are not limited.

The variable parameters are parameters which are optimization targets, and through the method of optimizing parameters of an electrochemical battery model according to embodiments of the present disclosure, an optimal combination (a combination of optimal values) of the variable parameters of the electrochemical model may be determined in operations S220 and S230.

The following table shows examples of groups of variable parameters optimized through the method of optimizing parameters of an electrochemical battery model of the present disclosure and parameters included in each group.

**[Table 1]**

| Parameter groups | Variable parameters | Symbols | Units | Note |
|---|---|---|---|---|
| Capacitive parameters | Positive lithium ion Maximum allowable concentration (Maximum value of positive Li ions) | CsMaxC | C/m³/s | |
| | Negative lithium ion Maximum allowable concentration (Maximum value of negative Li ions) | CsMaxA | C/m³/s | |
| Starting voltage parameters | Positive electrode starting voltage (Initial starting position of positive electrode OCV) | SOC_init_p | Non | 0~1 (1=100%) |
| | Negative electrode starting voltage (Initial starting position of negative electrode OCV) | SOC init n | Non | 0~1 (1=100%) |
| Resistance parameters | Positive electrode reaction rate | i0A | C/m²/s | |
| | Negative electrode reaction rate | i0C | C/m²/s | |
| | Ion conductivity in electrolyte | Cond C scale | mol/m³ | |

In Table 1, the capacitive parameters and starting voltage parameters may include parameters determined by material properties themselves regardless of the charging speed, and the resistance parameters may include parameters that are significantly affected when the charging speed changes.

For reference, among the capacitive parameters, a maximum allowable concentration of positive lithium ions (C/m³/sec) may be calculated as the product of an active material theoretical capacity (C/sec/g), a positive electrode density (g/m³), and a Faraday constant. A maximum allowable concentration of negative lithium ions may be calculated in the same manner (calculated by changing a positive electrode density to a negative electrode density). In specifying values of the active material theoretical capacity and the positive/negative electrode densities or setting allowable ranges, values obtained through experiments may be used.

The starting voltage parameter may be a degree of activation of the positive/negative electrodes and a rate at which a reversible reaction has progressed.

Meanwhile, it is assumed that the electrochemical model, which is the optimization target, as well as the cost function, the charging patterns (the first charging pattern, the second charging pattern, and the third charging pattern), the cell design information, the form factor information, the experimental data, and the allowable ranges of the parameter used by the optimization system 100 in the process of optimizing the electrochemical model are stored in the memory 1030 or the storage device 1040 before an operation of using the data is performed with an input from a user or an external device.

Operation S210 is an operation of inputting values into the fixed parameters of the electrochemical model.

In operation S210, the optimization system 100 determines the values of the fixed parameters of the electrochemical model on the basis of the cell design information of the evaluation target battery. For example, the optimization system 100 extracts the values of the fixed parameters from the cell design information or the form factor information stored in the memory 1030 or the storage device 1040 in advance and then substitutes the extracted values of the fixed parameters into the electrochemical model. As described herein, the fixed parameters may include the composition ratio of the electrode plate (e.g., Ni91V2, NCM811, and NCM111), the area of the electrode plate, the thickness of the electrode plate, a size of the pores of the electrode plate (which may be referred to as a "capacity of the electrode plate"), and the shapes of the internal components of the battery.

Operation S220 is an operation of determining the optimal combination of the capacitive parameter and the starting voltage parameter through the first simulation. In the present specification, the "optimal combination" of a plurality of parameters refers to an optimal combination of values of the plurality of parameters.

The optimization system 100 determines an optimal combination of a capacitive parameter and a starting voltage parameter of the electrochemical model through a first simulation in which a first charging pattern is applied to the electrochemical model while fixing a resistance parameter of the electrochemical model to a preset value.

In this case, the optimization system 100 may calculate the optimal combination of the starting voltage parameters after calculating the optimal combination of the capacitive parameters, calculate the optimal combination of the capacitive parameters after calculating the optimal combination of the starting voltage parameters, or simultaneously calculate the optimal combinations of the capacitive parameters and the starting voltage parameters.

For example, the optimization system 100 may acquire first simulation data on electrical characteristics by applying the first charging pattern to the electrochemical model, and acquire a combination of optimal values of the capacitive parameters and the starting voltage parameters of the electrochemical model in a direction of minimizing the cost function calculated on the basis of a difference between the experimental data on electrical characteristics, which is obtained by actually applying the first charging pattern to the evaluation target battery cell, and the first simulation data. In this case, there may be a situation in which a plurality of optimal combinations of the parameters have the same minimum value of the cost function. The optimization system 100 may acquire the measured data during application of the first charging pattern to the evaluation target battery, or may receive the measured data from an external device such as a computer or server.

In embodiments of the present disclosure, the optimization system 100 may determine the optimal combination of the capacitive parameter and the starting voltage parameter within set allowable ranges of the capacitive parameters and the starting voltage parameters. FIG. 3 is a diagram illustrating allowable ranges of the parameters of the electrochemical model. Referring to Fig. 3, among the capacitive parameters, allowable ranges of a maximum allowable concentration of the positive lithium ion CsMaxC and a maximum allowable concentration of the negative lithium ion CsMaxA may be set from 10⁴ C/m³/s to 10⁵ C/m³/s, and among the starting voltage parameters, allowable ranges of a positive electrode OCV initial starting position (a positive starting voltage SOC_init_p) and a negative electrode OCV initial starting position (a negative starting voltage SOC_init_n) may be set from 0 (0%) to 0.1 (10%). As described herein, the optimization system 100 prevents a combination of theoretically inappropriate parameter values from being determined as the optimal combination by setting the allowable ranges of the parameters.

In addition, a relationship between the parameters may be specified as a condition. For example, parameters a and b may be constrained to satisfy a condition "a>c*b."

Meanwhile, the cost function may be calculated on the basis of simulation data calculated by applying a charging pattern (e.g., a Constant Current-Constant Voltage, or CC-CV, pattern) to the electrochemical model (applied to both operations S220 and S230).

When the charging pattern applied to the electrochemical model is a CC-CV pattern, a Constant Current (CC) phase of the charging patterns is maintained until a cell voltage reaches a predetermined voltage (e.g., 4.2 V). A Constant Voltage (CV) phase is then maintained until the Constant Voltage (CV) phase is terminated at a time point when a predetermined ratio (e.g., 1/20) of a reference current (a C-Rate is 1C) is reached. For example, when a reference current is 100 A, a current that is a CV termination condition may be 5 A.

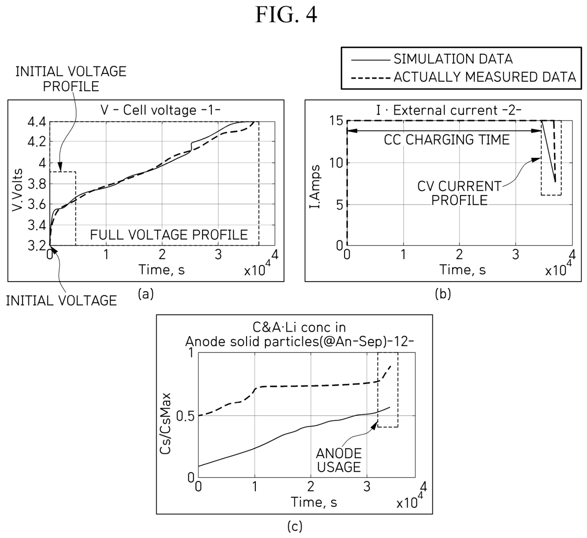

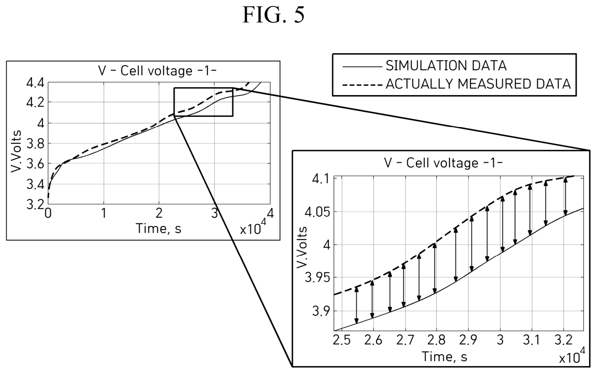

Factors (electrical characteristics) included in the cost function may include a starting voltage (first voltage) of the battery cell, an initial voltage profile, a CC charging time, a CV current profile, a voltage profile of the full section, and negative electrode usage (anode usage). Here, the initial voltage profile is a voltage profile for a given period of time (e.g., 5000 seconds) from the beginning. FIG. 4 is a diagram for describing the factors constituting the cost function that illustrates values that each factor may have in a graph. In FIGS. 4 and 5, dotted lines denote experimental data (actually measured data), and solid lines denote simulation data.

FIG. 5 shows an error between the experimental data and the simulation data for the voltage profile in relation to the calculation of the cost function. The cost function may be calculated on the basis of the error between the experimental data and the simulation data for each factor. For example, the cost function may be calculated as a weighted sum of absolute values (or an average value of the absolute values) of errors for the factors or as a weighted sum of a mean squared error (MSE). In the present disclosure, there is no limitation on a method of constructing the cost function, and all known methods (calculation methods) of constructing the cost function or loss function may be used.

The factors that may be included in the cost function are summarized in Table 2.

**[Table 2]**

| Factors | Description |
|---|---|
| Starting voltage | A voltage exhibited at a time point when a battery cell begins to be charged after a sufficient pause period |
| Initial voltage profile | A voltage profile applied to a cell for a predetermined initial time (e.g., 0 to 5000 seconds) |
| CC charging time | A charging time from a time point when a CC phase starts to a time point of transitioning to a CV phase |
| CV current profile | A profile of a current over time in the CV stage when the CC-CV charging pattern is applied to the electrochemical model |
| Full voltage profile | A voltage profile of the cell in the full charging process (a voltage change over time) |
| Negative electrode usage | A theoretical maximum capacity allowed for the negative electrode (lithium ion storage capacity) |

Meanwhile, various methods such as a gradient descent method, Newton's method, a quasi-Newton method, a genetic algorithm, a least square method, Bayesian optimization, and deep learning may be used as methods for searching for parameters in the process of finding a minimum value of the cost function, and in the present disclosure, there is no limitation on the parameter search method.

Operation S230 is an operation of determining the optimal combination of the resistance parameters through the second simulation.

The optimization system 100 may set the capacitive parameter and the starting voltage parameter as the optimal combination derived in operation S220 through the second simulation in which the second charging pattern is applied to the electrochemical model and change the resistance parameters to determine the optimal combination of the resistance parameters. When a plurality of optimal combinations of the capacitive parameters and the starting voltage parameters are derived in operation S220, the optimization system 100 may perform operation S230 on each of the optimal combinations of the capacitive parameters and the starting voltage parameters. In this case, a plurality of optimal combinations of the capacitive parameters, the starting voltage parameters, and the resistance parameters may be derived.

Specifically, the optimization system 100 may acquire second simulation data on electrical characteristics by applying the second charging pattern to the electrochemical model, and acquire a combination of optimal values (optimal combination) of the resistance parameters of the electrochemical model in a direction of minimizing the cost function calculated on the basis of a difference between the experimental data on electrical characteristics, which is obtained by actually applying the second charging pattern to the evaluation target battery cell, and the second simulation data. In this case, there may be a situation in which the optimal combinations of the capacitive parameters, the starting voltage parameters, and the resistance parameters have the same minimum value of the cost function. The optimization system 100 may acquire the measured data during application of the second charging pattern to the evaluation target battery, or may receive the measured data from an external device such as a computer or server.

In addition, a relationship between the parameters may be specified as a condition in operation S230. For example, parameters a and b may be constrained to satisfy a condition "a>c*b." As a specific example, among the resistance parameters, a negative electrode reaction rate i0C may be constrained to satisfy a condition that it is less than 10 times a positive reaction rate i0A. As another example, when the plurality of optimal combinations of the capacitive parameters, the starting voltage parameters, and the resistance parameters are derived as the result of performing operation S230, an optimal combination in which the negative electrode reaction rate i0C is 10 times or more the positive electrode reaction rate i0A may be excluded. This condition designation is intended to prevent theoretically inappropriate combinations of the parameter values from being determined as the optimal combination and to derive a realistic optimal combination.

The factors included in the cost function and the configuration of the cost function calculation in operation S230 are the same as those described in operation S220. However, the cost function used by the optimization system 100 in operation S230 may be the same as or different from the cost function used by the optimization system 100 in operation S220.

The charging speed of the second charging pattern applied to the electrochemical model in operation S230 is faster than that of the first charging pattern applied to the electrochemical model in operation S220. The first charging pattern may be a low-speed charging pattern, and the second charging pattern may be a high-speed charging pattern. For reference, whether the charging pattern is fast or slow may be distinguished on the basis of a charging speed (e.g., a C-Rate), a charging time, or charging power.

As described herein, since the capacitive parameters and starting voltage parameters may include parameters determined by material properties themselves regardless of the charging speed, and the resistance parameters may include parameters that are significantly affected when the charging speed changes, it is desirable to set the first charging pattern as a low-speed charging pattern with low resistance involvement to optimize the capacitive parameters and the starting voltage parameters, and to set the second charging pattern as a high-speed charging pattern to optimize the resistance parameters.

As another example, the order of operations S230 and S220 may be changed according to a circumstance. That is, after the resistance parameter is determined first, the capacitive parameter and the starting voltage parameter may be determined.

As in operation S220, in operation S230, the optimization system 100 may determine the optimal combination of the resistance parameters within a set allowable range of the resistance parameters. As shown in FIG. 3, the allowable ranges of the positive electrode reaction rate i0A and the negative electrode reaction rate i0C may each be set in the range of 10⁻⁶ to 10⁻⁵, and ion conductivity C_cond_scale in the electrolyte may be set in the range of 0.04 to 0.05.

As a result of operations S220 and S230, the optimization system 100, an optimal combination of the capacitive parameter, the starting voltage parameter, and the resistance parameter are determined. The optimization system 100 may confirm the electrochemical model by applying the determined optimal combination, for example for later use in operation S260.

Operation S240 is an operation of checking whether a plurality of parameter combinations are determined for the electrochemical model. As described herein, the plurality of parameter combinations satisfying a minimum of the cost function may be derived in the previous operation. The optimization system 100 may check whether the plurality of optimal combinations are determined for the capacitive parameters, the starting voltage parameters, and the resistance parameters, perform operation S250 when the plurality of optimal combinations are determined, and confirm the electrochemical model by applying the corresponding optimal combination to perform operation S260 when one optimal combination is determined. When it is determined in Operation S240 that there is not a plurality of parameter combinations, the optimization system 100 may confirm the electrochemical model, by applying the optimal combination determined in step S230, to perform operation S260. Operation S250 is an operation of determining a final parameter combination on the basis of a final resistance value of the second simulation.

When the plurality of optimal combinations are determined for the capacitive parameters, the starting voltage parameters, and the resistance parameters, the optimization system 100 may determine the final parameter combination among the plurality of optimal combinations on the basis of the final resistance value included in the result of the second simulation and input the final parameter combination into the electrochemical model to confirm the electrochemical model.

For example, when the plurality of parameter combinations satisfying the minimum value of the cost function are present, the optimization system 100 may calculate the final resistance value of the evaluation target battery cell by applying Ohm's law (V=IR) on the basis of on the second simulation data and determine a parameter combination with the smallest error between a final resistance value of the cell included in the experimental data and the calculated final resistance value (the resistance value calculated on the basis of data generated by the electrochemical model) as the final parameter combination.

Operation S260 is an operation of predicting a charging time of the evaluation target battery and whether a side reaction occurs through the third simulation. Side reactions are unwanted reactions within a battery that result in performance degradation, such as decomposition of electrolyte components, or irreversible degradation of positive and negative electrode materials.

The optimization system 100 may predict the charging time of the evaluation target battery and whether the side reaction occurs through the third simulation in which the third charging pattern input by a user or an external device is applied to the confirmed electrochemical model. The predictions of the optimization system 100 may be output to a user or users. For example, an indication of the predicted charging time of the evaluation target battery may be output to the user or the external device following an input of the third charging pattern. The optimization system 100 may predict multiple predictions for a charging time of an evaluation battery for a respective multiple different charging patterns input by a user or an external device. The user may then select whichever charging pattern is preferable based on operational needs. For example, a slower charging pattern provides long-term efficiencies and improvements on the life and performance of an evaluation target battery, but a faster charging pattern provides quicker charging of the battery. The multiple predicted charging times may allow a user to select the charging pattern that provides the most efficient charging pattern for an available time period. If a side reaction is predicted to occur in the evaluation target battery, a warning indication may be output. Multiple predictions of occurrence of a side reaction may also be output for a respective multiple different charging patterns. The user may then be able to select a charging pattern that does not result in a risk of a side reaction occurring.

Operation S260 is an operation of utilizing the confirmed electrochemical model, and there may be various ways of utilizing the confirmed electrochemical model in addition to the content described in operation S260. For example, in addition to predicting a charging time or predicting whether a side reaction will occur, operation S260 may include additional or alternative indications of physical properties prevailing within the battery. For example, the model may output a State of Charge of the battery, a State of Health of the battery, temperature dependence of battery capacity, predicted remaining service life or other properties (including parameters as described above such as the capacitive parameters). Based on the information output by operation S260, the user may undertake actions relating to the evaluation target battery, including replacement, maintenance, adjusting a charging pattern, and/or adjusting temperature or cooling properties of the battery environment.

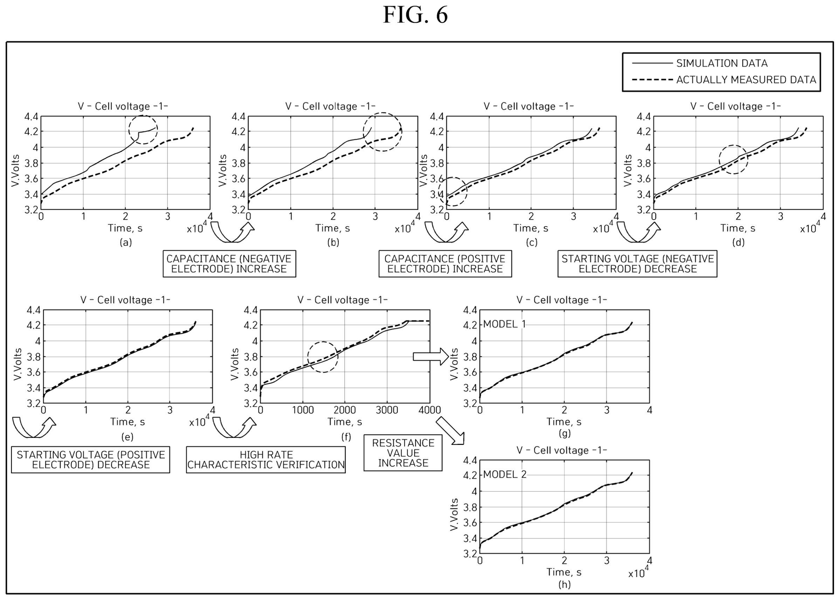

FIG. 6 is a diagram for describing a process of fitting simulation data to actually measured data according to optimization of the parameters of the electrochemical model.

FIG. 6 shows case in which, after the capacitive parameter is optimized, the starting voltage parameter is optimized and then the resistance parameter is optimized, and it can be seen that the simulation data gets closer to the actually measured data as the operations progress.

The herein method of optimizing parameters of an electrochemical battery model has been described with reference to the flowchart shown in the drawings. Although the method has been illustrated and described as a series of blocks for simplicity of description, the present disclosure is not limited to the order of the blocks, some blocks may occur in a different order or concurrently with other blocks than illustrated and described in the present specification, and various other branches, flow paths, and orders of blocks may be implemented that achieve the same or similar result. In addition, not all illustrated blocks are necessarily required for implementing the method described herein.

Meanwhile, in the description referring to FIG. 2, the operations may be further divided into additional operations or combined into fewer operations depending on the implementation example of the present disclosure. In addition, some operations may be omitted, when necessary, and the order between operations may be changed. In addition, although other content is omitted, the content of FIG. 1 may also be applied to the content of FIG. 2. In addition, the content of FIGS. 2 to 6 may be applied to the content of FIG. 1.

For reference, the components according to the embodiments of the present disclosure may be implemented in the form of software or hardware such as a field programmable gate array (FPGA) or an application specific integrated circuit (ASIC) and may perform predetermined roles.

However, the "components" are not limited to software or hardware, and each component may be formed to be stored in an addressable storage medium or to reproduce one or more processors.

Thus, as an example, the components include components such as software components, object-oriented software components, class components, and task components, and processes, functions, attributes, procedures, sub-routines, segments of a program code, drivers, firmware, microcodes, circuits, data, databases, data structures, tables, arrays, and variables.

The components and functions provided within the components may be combined into a smaller number of components or may be further divided into additional components. In this circumstance, it will be understood that each block of flowchart diagrams and combinations of the flowchart diagrams may be performed by computer program instructions. These computer program instructions may be embodied in a processor of a general purpose computer, a special purpose computer, or other programmable data processing equipment such that the instructions performed by the processor of the computer or other programmable data processing equipment generate parts for performing functions described in flowchart block(s). These computer program instructions may use a computer or other programmable data processing equipment for implementing a function in a specific manner or may be stored in a computer readable memory, and thus the instructions which use the computer or are stored in the computer readable memory can produce a manufacturing article including instruction parts for performing the functions described in the flowchart block(s). Since the computer program instructions may also be embedded in the computer or other programmable data processing equipment, instructions to perform a series of operations on the computer or other programmable data processing equipment to generate a computerexecuted process, thereby operating the computer or other programmable data processing equipment, may provide operations for performing the functions described in the flowchart block(s).

In addition, each block may represent a module, segment, or a portion of a code, which includes one or more executable instructions for executing specified logical function(s). It should also be noted that, in some alternative embodiments, it is also possible for the functions mentioned in the blocks to occur out of order. For example, two blocks shown in succession can be performed substantially simultaneously or sometimes the two blocks can be performed in the reverse order according to corresponding functions.

According to embodiments of the present disclosure, a period for developing an electrochemical model suitable for a specific condition can be shortened.

In addition, according to embodiments of the present disclosure, reproducibility and consistency of a developed electrochemical model can be improved.

According to embodiments of the present disclosure, the extent to which an electrochemical model conforms to a design goal can be quantified and evaluated.

The effects obtained by the present disclosure are not limited to the herein-mentioned effects and other effects which are not described can be clearly understood by those skilled in the art to which the present disclosure pertains from the herein description. Although the description has been made with reference to embodiments of the present disclosure, it should be understood that various alternations and modifications of the present disclosure can be devised by those skilled in the art to which the present disclosure pertains without departing from the scope of the present disclosure, which are defined by the appended claims.

Further Embodiments are set out in the following clauses:
Clause 1. A method of optimizing parameters of an electrochemical battery model, the method comprising:
   determining, by a system for optimizing parameters of the electrochemical battery model, values of fixed parameters of the electrochemical model on the basis of cell design information of an evaluation target battery;
   determining, by the system, an optimal combination of a capacitive parameter and a starting voltage parameter of the electrochemical model through a first simulation in which a first charging pattern is applied to the electrochemical model while fixing a resistance parameter of the electrochemical model to a preset value; and
   determining, by the system, an optimal combination of the resistance parameter by changing the resistance parameter through a second simulation in which a second charging pattern is applied to the electrochemical model while the capacitive parameter and the starting voltage parameter are set to the optimal combination.
Clause 2. The method according to clause 1, wherein a charging speed of the first charging pattern is lower than a charging speed of the second charging pattern.
Clause 3. The method according to clause 1 or clause 2, wherein the first charging pattern is a low-speed charging pattern.
Clause 4. The method according to any preceding clause, wherein the second charging pattern is a high-speed charging pattern.
Clause 5. The method according to any preceding clause, wherein the capacitive parameter comprises a maximum allowable concentration of positive lithium ions and a maximum allowable concentration of negative lithium ions.
Clause 6. The method according to any preceding clause, wherein the starting voltage parameter comprises a positive electrode starting voltage and a negative electrode starting voltage.
Clause 7. The method according to any preceding clause, wherein the resistance parameter comprises a positive electrode reaction rate, a negative electrode reaction rate, and ion conductivity in an electrolyte.
Clause 8. The method according to any preceding clause, wherein the determining of the optimal combination of the capacitive parameter and the starting voltage parameter comprises determining, by the system, the optimal combination of the capacitive parameter and the starting voltage parameter within a set allowable range of the capacitive parameter and the starting voltage parameter.
Clause 9. The method according to any preceding clause, further comprising:
   checking, by the system, whether a plurality of optimal combinations are determined for the capacitive parameter, the starting voltage parameter, and the resistance parameter; and
   when the plurality of optimal combinations are determined for the capacitive parameter, the starting voltage parameter, and the resistance parameter, determining, by the system, a final parameter combination among the plurality of optimal combinations on the basis of a final resistance value included in a result of the second simulation and confirming the electrochemical model by substituting the final parameter combination into the electrochemical model.
Clause 10. The method according to any preceding clause, further comprising predicting, by the system, charging time and occurrence of a side reaction of the evaluation target battery through a third simulation in which a third charging pattern is applied to the confirmed electrochemical model.
Clause 11. A system for optimizing parameters of an electrochemical battery model, the system comprising:
   a memory configured to store computer-readable commands; and
   at least one processor configured to execute the commands,
   wherein the at least one processor executes the commands to:
   determine values of fixed parameters of the electrochemical model on the basis of cell design information of an evaluation target battery;
   determine an optimal combination of a capacitive parameter and a starting voltage parameter of the electrochemical model through a first simulation in which a first charging pattern is applied to the electrochemical model while fixing a resistance parameter of the electrochemical model to a preset value; and
   determine an optimal combination of the resistance parameter by changing the resistance parameter through a second simulation in which a second charging pattern is applied to the electrochemical model while the capacitive parameter and the starting voltage parameter are set to the optimal combination.
Clause 12. The system according to clause 11, wherein a charging speed of the first charging pattern is lower than a charging speed of the second charging pattern.
Clause 13. The system according to clause 11 or clause 12, wherein the first charging pattern is a low-speed charging pattern.
Clause 14. The system according to any one of clauses 11 - 13, wherein the second charging pattern is a high-speed charging pattern.
Clause 15. The system according to any one of clauses 11 - 14, wherein the capacitive parameter comprises a maximum allowable concentration of positive lithium ions and a maximum allowable concentration of negative lithium ions.

## Claims

1. A method of optimizing parameters of an electrochemical battery model, the method comprising:
determining, by a system for optimizing parameters of the electrochemical battery model, values of fixed parameters of the electrochemical model on the basis of cell design information of an evaluation target battery;
determining, by the system, an optimal combination of a capacitive parameter and a starting voltage parameter of the electrochemical model through a first simulation in which a first charging pattern is applied to the electrochemical model while fixing a resistance parameter of the electrochemical model to a preset value; and
determining, by the system, an optimal resistance parameter by changing the resistance parameter through a second simulation in which a second charging pattern is applied to the electrochemical model while the capacitive parameter and the starting voltage parameter are set to the optimal combination.

2. The method as claimed in claim 1, wherein a charging speed of the first charging pattern is lower than a charging speed of the second charging pattern.

3. The method as claimed in claim 1 or claim 2, wherein the first charging pattern is a low-speed charging pattern.

4. The method as claimed in any preceding claim, wherein the second charging pattern is a high-speed charging pattern.

5. The method as claimed in any preceding claim, wherein the capacitive parameter comprises a maximum allowable concentration of positive lithium ions and a maximum allowable concentration of negative lithium ions.

6. The method as claimed in any preceding claim, wherein the starting voltage parameter comprises a positive electrode starting voltage and a negative electrode starting voltage.

7. The method as claimed in any preceding claim, wherein the resistance parameter comprises a positive electrode reaction rate, a negative electrode reaction rate, and ion conductivity in an electrolyte.

8. The method as claimed in any preceding claim, wherein the determining of the optimal combination of the capacitive parameter and the starting voltage parameter comprises determining, by the system, the optimal combination of the capacitive parameter and the starting voltage parameter within a set allowable range of the capacitive parameter and the starting voltage parameter.

9. The method as claimed in any preceding claim, further comprising:
checking, by the system, whether a plurality of optimal combinations are determined for the capacitive parameter, the starting voltage parameter, and the resistance parameter; and
when the plurality of optimal combinations are determined for the capacitive parameter, the starting voltage parameter, and the resistance parameter, determining, by the system, a final parameter combination among the plurality of optimal combinations on the basis of a final resistance value included in a result of the second simulation and confirming the electrochemical model by substituting the final parameter combination into the electrochemical model.

10. The method as claimed in any preceding claim, further comprising predicting, by the system, charging time and occurrence of a side reaction of the evaluation target battery through a third simulation in which a third charging pattern is applied to a confirmed electrochemical model, the confirmed electrochemical model being determined by substituting an optimal combination of the capacitive parameter, the starting voltage parameter, and the resistance parameter into the electrochemical model.

11. A system for optimizing parameters of an electrochemical battery model, the system comprising:
at least one processor configured to execute computer readable commands to:
determine values of fixed parameters of the electrochemical model on the basis of cell design information of an evaluation target battery;
determine an optimal combination of a capacitive parameter and a starting voltage parameter of the electrochemical model through a first simulation in which a first charging pattern is applied to the electrochemical model while fixing a resistance parameter of the electrochemical model to a preset value; and
determine an optimal resistance parameter by changing the resistance parameter through a second simulation in which a second charging pattern is applied to the electrochemical model while the capacitive parameter and the starting voltage parameter are set to the optimal combination.

12. The system as claimed in claim 11, wherein a charging speed of the first charging pattern is lower than a charging speed of the second charging pattern.

13. The system as claimed in claim 11 or claim 12, wherein the first charging pattern is a low-speed charging pattern; and/or
wherein the second charging pattern is a high-speed charging pattern.

14. The system as claimed in any one of claims 11 - 13, wherein the capacitive parameter comprises a maximum allowable concentration of positive lithium ions and a maximum allowable concentration of negative lithium ions.

15. The system as claimed in any one of claims 11 - 14, further comprising a memory configured to store the computer-readable commands.
